# EUROPEAN PATENT SPECIFICATION

(11) **EP 4 189 840 B1**
(45) Date of publication and mention of the grant of the patent: **09.12.2026**
(21) Application number: 20751304.5
(22) Date of filing: 29.07.2020
(51) Int. Cl.: H04B 7/0491, H04B 7/06

(54) **MULTILAYER DIGITAL SECTOR FOR ADVANCED ANTENNA SYSTEMS**
MEHRFREQUENZ-DIGITALSEKTOR FÜR ERWEITERTE ANTENNENSYSTEME
SECTEUR NUMÉRIQUE À FRÉQUENCES MULTIPLES POUR DES SYSTÈMES D'ANTENNE AVANCÉS

(43) Date of publication of application: 07.06.2023
(73) Proprietor: Telefonaktiebolaget LM Ericsson (publ), 164 83 Stockholm (SE)
(72) Inventor: LEROUX, Philippe, Ottawa, Ontario K1L 7S5 (CA)
(74) Representative: Zacco Sweden AB
(86) International application number: PCT/IB2020/057169
(87) International publication number: WO 2022/023793

(56) References cited:
- US-A1- 2009 323 530
- US-A1- 2013 235 807
- US-A1- 2014 073 337
- US-A1- 2018 041 908

## Description

### TECHNICAL FIELD

This disclosure relates to wireless communication and in particular, to providing multilayer digital sectors for advanced antenna systems (AAS).

### BACKGROUND

Wireless communication systems include Fourth Generation (4G) and Fifth Generation (5G), also known as Long Term Evolution (LTE) and New Radio (NR), respectively. The wireless communication systems have been developed, and continue to be developed according to technical standards provided by the Third Generation Partnership Project (3GPP). Such technical standards prescribe certain attributes of network nodes (also known as base stations) and wireless devices (WD), as well as rules and mechanisms for communication between the network nodes and wireless devices.

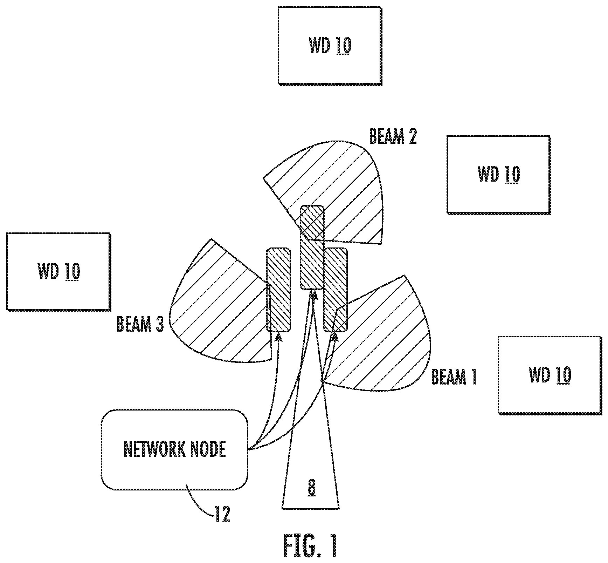

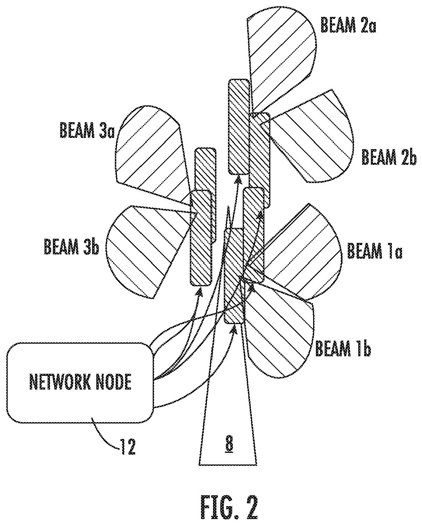

A 4G or 5G network node, such as an eNodeB or a gNodeB, may typically include an advanced antenna system (AAS) comprising multiple antenna elements. By controlling the signals applied to these antenna elements, an AAS may be configured to form beams that are directed, i.e., radiated, in different directions. FIG. 1 shows a cell tower 8, where three beams - Beam 1, Beam 2 and Beam 3 -- each providing coverage over a different sector, are provided in the same cell or coverage area, thereby serving different WDs 10. Each beam can be configured by a different network node 12 or can be configured by separate network nodes 12. As shown in FIG. 1, each beam of the three beams may be generated by an AAS. Each beam of the three beams may cover 120 degrees or more, for example. Or as another example, there may be four AASs to generate four beams covering about 90 degrees each. More AASs and more beams may be added. In FIG. 1, each beam of the three beams may be comprised of one or more highly directive beams that are steered by their respective AAS. This increases network densification. Thus, a beam in each sector may be a composite beam formed by two or more narrower beams. Some antennas that provide such beamforming into sectors may be housed in a package. FIG. 2 shows one antenna per beam, so there are 6 antennas and 6 beams.

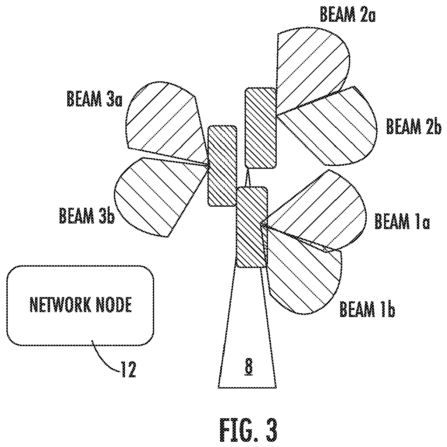

The beamforming to form these sectors is currently performed in the analog domain within the AAS, although with increasingly larger numbers of antenna elements, digital beamforming becomes feasible, as shown in FIG. 3.

Typically, only WDs in the boresight direction of the beam will receive maximum gain. Off-boresight WDs will receive less power. Also, there may be overlap of the beam patterns in adjacent sectors, causing signals in the beam of one sector to interfere with signals in the beam of an adjacent sector. This interference can be reduced using coordinated multipoint (CoMP) schemes to blank a cell, but at increased cost, complexity and loss of transmission opportunities. Also, when densifying a base station site with beam sectorization, cell edges and gaps in coverage are created between sectors so that mobility between sectors is further disturbed. Also, higher order sectorization adds more cell edges and requires that handing over a WD from one sector to another sector must be performed with increased frequency, resulting in bottlenecks and increased control signaling that prevents the achievement of maximum performance.
The patent application US2014/073337A1 discloses a communication device and communication method using millimeter-wave frequency band.
The patent application US2013/235807A1 discloses a method and apparatus for virtual sectorization using an active antenna array.
The patent application US2009/323530A1 discloses a method to perform dynamic load balancing of coverage areas in a wireless communication network.
The patent application US2018/041908A1 discloses a method for antenna sector configuration for an adaptive antenna system.

### SUMMARY

The invention is defined by the independent claims. Furthermore, the embodiments of the invention are those defined by the claims. Moreover, examples and embodiments, which are not covered by the claims, are presented not as embodiments of the invention, but as background art or examples useful for understanding the invention. Digital sectorization offers greater stability over WD-specific beamforming and multiuser multiple input multiple output (MU-MIMO), especially in the case of small, interference-limited cells. Digital sectorization therefore becomes a desirable feature for some wireless communication systems for example, for New Radio (NR) and Long Term Evolution (LTE).

Some embodiments advantageously provide a method and system for providing multilayer digital sectors for advanced antenna systems. Some embodiments provide optimized digital sectorization to benefit carrier aggregation, mobility and handover. In some embodiments, one cell may be composed of multiple virtual cells by applying methods described herein to multibeam synchronization signal blocks (SSB), such as for example, in NR. Some embodiments provide inter-frequency load-balancing. By shifting and/or adding gaps between digital cells staggered across multiple layers, improvement in maximum throughput over conventional methods can be obtained, including for high load scenarios. Gaps can be created to reduce cross-interference and handover anticipation can be added. Low load scenarios where carrier aggregation conditions are favorable can be addressed by dynamic sector shifting and dynamically increasing sector overlap.

Some embodiments reduce interference and stable interferences as opposed to WD beamforming methods such as TM9. Some embodiments provide:
- Increased coverage with higher EIRP of narrow DS;
- Increased sum throughput due to increase CQI;
- Increased UE minimum throughput; and/or
- Minimized handover events via DS dynamic cell shaping, optimized deployment and handover anticipation.

According to one aspect, a network node is configured for multilayer, spatially diverse communications. The network node includes a group of antennas configured to radiate at least two beams within a cell on different frequencies so that overlapping portions of the at least two beams do not interfere.

According to this aspect, in some embodiments, the network node further includes a beamformer configured to incrementally vary a beam width of at least one of the at least two beams based at least in part on a density of wireless devices (WDs) within a region of coverage of at least one of the at least two beams. In some embodiments, a beam width is selected that results in a narrowest beam width for which communication can be sustained with a given set of WDs. In some embodiments, the network node further includes a beamformer configured to incrementally vary a pointing angle of at least one of the at least two beams based at least in part on a density of wireless devices (WDs) within a region of coverage of at least one of the at least two beams. In some embodiments, a pointing angle is selected that results in a highest concentration of WDs supported by one of the at least two beams. In some embodiments, a distribution of wireless devices (WDs) supported by one of the at least two beams is determined based at least in part on angles of arrivals of uplink signals from the WDs. In some embodiments, a distribution of wireless devices (WDs) supported by one of the at least two beams is determined based at least in part on precoder matrix indicator (PMI) feedback of the WDs. In some embodiments, a distribution of wireless devices (WDs) supported by one of the at least two beams is determined based at least in part on a number of radio resource control (RRC)-connected WDs. In some embodiments, at least one of a beam width and a pointing angle is based at least on channel quality indicators (CQI) received from a plurality of wireless devices (WDs). In some embodiments, the network node is further configured to add beams, each added beam having a beam width that is narrower than a current beam width when a number of wireless devices (WDs) within coverage of one of the first, second and third beams exceeds a threshold. In some embodiments, the network node is further configured to remove beams and adjust a width of at least one of remaining beams. In some embodiments, the group of antennas is configured to be excited to radiate a third beam within the cell on a first frequency of the frequencies of the at least two beams, the third beam being positioned such that only sidelobes of the third beam overlap a main beam of the at least two beam that is on the first frequency.

According to another aspect, a method in a network node configured for multilayer, spatially diverse communications is provided. The method includes electronically steering a group of antennas 20 to radiate at least two beams within a cell on different frequencies so that overlapping portions of the at least two beams do not interfere.

According to this aspect, in some embodiments the method further includes varying a beam width of at least one of the at least two beams based at least in part on a density of wireless devices (WDs) within a region of coverage of at least one of the at least two beams. In some embodiments, a beam width is selected that results in a highest concentration of WDs supported by one of the at least two beams. In some embodiments, the method further includes incrementally varying a pointing angle of at least one of the at least two beams based at least in part on a density of wireless devices (WDs) within a region of coverage of at least one of the at least two beams. In some embodiments, a pointing angle is selected that results in a highest concentration of WDs supported by one of the at least two beams. In some embodiments, a distribution of wireless devices (WDs) supported by one of the at least two beams is determined based at least in part on angles of arrivals of uplink signals from the WDs. In some embodiments, a distribution of wireless devices (WDs) supported by one of the first, second and third beams is determined based at least in part on precoder matrix indicator (PMI) selections of the WDs. In some embodiments, a distribution of wireless devices (WDs) supported by one of the first, second and third beams is determined based at least in part on a number of radio resource control (RRC)-connected WDs. In some embodiments, at least one of a beam width and a pointing angle is based at least on channel quality indicators (CQI) received from a plurality of wireless devices (WDs). In some embodiments, the method further includes adding beams, each added beam having a beam width that is narrower than a current beam width when a number of wireless devices (WDs) within coverage of one of the at least two beams exceeds a threshold. In some embodiments, the method further includes removing beams and adjusting a width of at least one of remaining beams. In some embodiments, the group of antennas is configured to radiate a third beam within the cell on a first frequency of the frequencies of the at least two beams, the third beam being positioned such that only sidelobes of the third beam overlap a main beam of the at least two beam that is on the first frequency.

According to yet another aspect, an advanced antenna system (AAS) includes a plurality of antennas and processing circuitry in communication with the plurality of antennas. The processing circuitry is configured to: logically divide a coverage area into a plurality of sectors; steer a first main beam to a first sector of the plurality of sectors at a first frequency; steer a second main beam to a second sector of the plurality of sectors at the first frequency, an angular spread between the first and second sectors being chosen so that the first main beam does not overlap the second main beam; and steer a third main beam to a third sector of the plurality of sectors at a second frequency between the first sector and the second sector, a difference between the first frequency and the second frequency being chosen so that overlap between the third main beam and one of the first and second main beams does not result in interference.

According to another aspect, a method in an advanced antenna system (AAS) includes logically dividing a coverage area into a plurality of sectors; steering a first main beam to a first sector of the plurality of sectors at a first frequency; steering a second main beam to a second sector of the plurality of sectors at the first frequency, an angular spread between the first and second sectors being chosen so that the first main beam does not overlap the second main beam; and steering a third main beam to a third sector of the plurality of sectors at a second frequency between the first sector and the second sector, a difference between the first frequency and the second frequency being chosen so that overlap between the third main beam and one of the first and second main beams does not result in interference.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a conventional 3-sector site;
FIG. 2 illustrates hard sectorization to achieve 6 sectors;
FIG. 3 illustrates digital sectorization (DS) with an advanced antenna system (AAS);
FIG. 4 illustrates an embodiment of a wireless communication system with a network node configured according to principles set forth herein;
FIG. 5 is a plot of antenna gain or intensity for five digital sectors with non-overlapping beams on each layer;
FIG. 6 illustrates dual band digital sectorization;
FIG. 7 illustrates logical connections within a network node configured according to principles set forth herein;
FIG. 8 illustrates shifted beams;
FIG. 9 illustrates shifted narrow beams;
FIG. 10 illustrates shifted digital sectors;
FIG. 11 illustrates nonoverlapping beams;
FIG. 12 illustrates cell edge mobility;
FIG. 13 is a flowchart of an example process for determining a steering angle;
FIG. 14 is a flowchart of an example process for determine a beam width;
FIG. 15 is a flowchart of an example process for handoff anticipation;
FIG. 16 is a flowchart of an example process for steering beams on different layers; and
FIG. 17 is a flowchart of another example process for steering beams on different layers.

### DETAILED DESCRIPTION

Before describing in detail example embodiments, it is noted that the embodiments reside primarily in combinations of apparatus components and processing steps related to providing multilayer digital sectors for advanced antenna systems. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

In some embodiments, two adjacent beams whose main lobes may overlap are transmitted on different layers (frequencies). For example, in some embodiments, a first set of beams on a first frequency are steered to different directions such that only sidelobes of beams of the first set overlap in gaps between the main beams of the first set, while a second set of at least one beam on a second frequency are steered into at least one gap between the beams of the first set. In this way, interference between beams in different sectors is substantially reduced while enabling efficient handover of WDs moving from one sector to another.

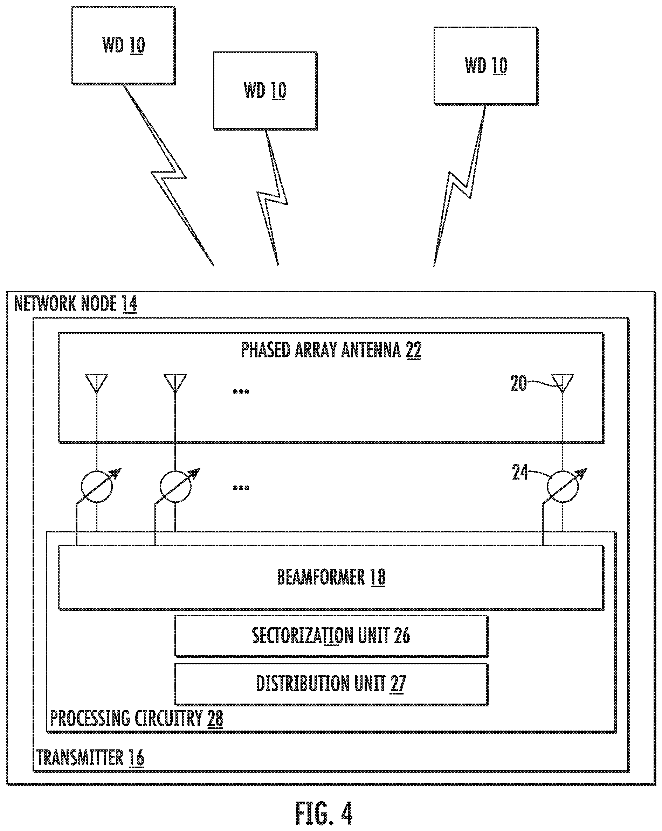

Returning to the drawing figures, where like reference designators refer to like elements, there is shown in FIG. 4 a block diagram of a wireless communication system having wireless devices 10 and one embodiment of a network node 14 configured to provide multilayer spatially diverse communication according to principles set forth herein. The network node 14 has a transmitter 16 (and also a receiver, in some embodiments). The transmitter 16 may have a beamformer 18 which may be used to steer and shape beams transmitted by antennas 20 of the transmitter 16. The antennas 20 may be antenna elements of a phased array antenna 22. The beamformer 18 may steer a beam by adjustment of phase shifters 24. The beamformer 18 may shape the beam by phase adjustments and amplitude adjustments of signals transmitted by the antenna elements 20. Note that in some embodiments, the antennas 20 may be narrow beam antennas. A sectorization unit 26 is configured to logically divide a coverage area into sectors and alter the beamformer 18 to achieve one or more beams in one or more of the sectors. A distribution unit 27 may be configured to determine a distribution of WDs, as explained below. The beamformer 18, the sectorization unit 26 and the distribution unit 27 may be implemented by processing circuitry 28. For example, the beamformer 18 may be implemented by a digital signal processor (DSP) configured to determine amplitude and phase weights to apply to the antennas 20 to steer and shape the beams according to principles set forth below. Note that at least some of the functions described herein as being performed by the processing circuitry 28 may be performed external to the transmitter 16.

The processing circuitry 28 may include a processor, such as a central processing unit, and memory. The processing circuitry 28 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor may be configured to access (e.g., write to and/or read from) the memory, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the beamformer 18, which is part of network node 14, further has software stored internally in, for example, memory, or stored in external memory (e.g., database, storage array, network storage device, etc.) accessible by the beamformer 18 via an external connection. The software may be executable by the processing circuitry 28. The processing circuitry 28 may be configured to control any of the methods and/or processes described herein and/or to cause such methods, and/or processes to be performed, e.g., by the beamformer 18 and/or other parts of the network node 14. The processor may be one or more processors for performing beamformer 18, sectorization unit 26 and/or distribution unit 27 functions described herein. The memory is configured to store data, programmatic software code and/or other information described herein. In some embodiments, the software may include instructions that, when executed by the processor and/or processing circuitry 28, cause the processor and/or processing circuitry 28 to perform the processes described herein with respect to beamformer 18, sectorization unit 26 and/or distribution unit 27 and/or other parts of network node 14.

The processor is configured to execute software stored in the memory to implement the functions of a plurality of software and or hardware modules. These modules and units may include beamformer 18, sectorization unit 26 and/or distribution unit 27. Note also that the connections shown between the elements in FIG. 4 represent only some of the exchanges of information between software or hardware modules. Other information exchanges between the various elements may take place that are not shown by arrows in FIG. 4.

In some embodiments, a network node 14 can produce two sectorized beams that are shifted in space so that each sectorized beam has a different boresight. An effect of this beam shifting results in the provision of different sectors that receive maximum gain. The WD may then choose to connect on a carrier signal having the highest reference signal received power (RSRP) gain. This gain is defined by the beam shape cell specific reference signal CRS-0 or an SSB in NR. In effect, the total throughput of all sectors can be increased by beam shifting to create sectors where there are large concentrations of WDs. However, as mentioned above, such beam shifting creates gaps between beams. This problem is overcome in some embodiments by steering a beam on a different frequency (layer) to the gap, so that there is spatial overlap of the main beams but where the beams have different frequencies. This reduces inter-beam interference. Further, to facilitate mobility, a WD moving out of a first sector into a second sector may be caused to switch from the first carrier frequency of the beam of the first sector to the second carrier frequency of the beam of the second sector. This switch in frequency (layer) caused by the network node may then be part of the handover procedure for handing over the WD from the first sector beam to the second sector beam.

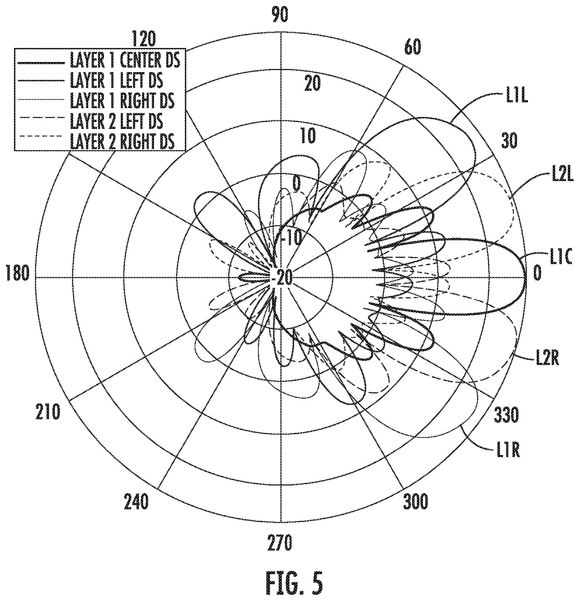

FIG. 5 shows an example of a radiation pattern of digitally sectorized beams configured to provide multi-layer communications between a network node (radio base station) and a wireless device (WD). A first beam (L1C) on layer 1 (frequency 1) is centered at zero degrees. A second beam (L1L) on layer 1 is centered at about 40 degrees. A third beam (L1R) on layer 1 is centered at about 320 degrees. A fourth beam (L2) on layer 2 (frequency 2) is centered at about 20 degrees and lies between L1L and L1C. A fifth beam (L2R) on layer 2 is centered at about 340 degrees and lies between L1C and L1R. Note that there is no or negligible overlap of the main beams of the first, second and third beams (L1C, L1L and L1R). Also, there is no or negligible overlap of the main beams of the fourth and fifth beams (L2L and L2R). There is substantial overlap of the beams on layer 1 and the beams on layer 2. However, there may be substantially negligible interference between the beams on different layers, since they are on different frequencies.

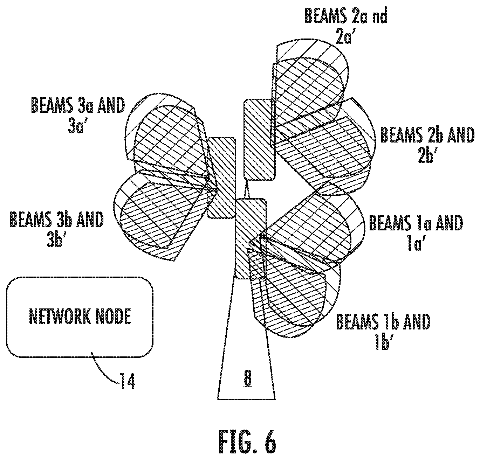

FIG. 6 illustrates an embodiment with each of the three sectors, 1, 2 and 3, having four beams. For example, sector 1 has beams 1a and 1a' and has beams 1b and 1b'. Beams 1a and 1a' overlap in space but are on different frequencies. These could be dual carriers in a carrier aggregation configuration of the network node 14 and WD 10. Similarly, beams 1b and 1b' overlap in space but are on different frequencies. Conversely, beams 1a and 1b may have main lobes that do not overlap in space and therefore, may be on the same frequency. Likewise, beams 1a' and 1b' may have main lobes that do not overlap in space and are on the same frequency.

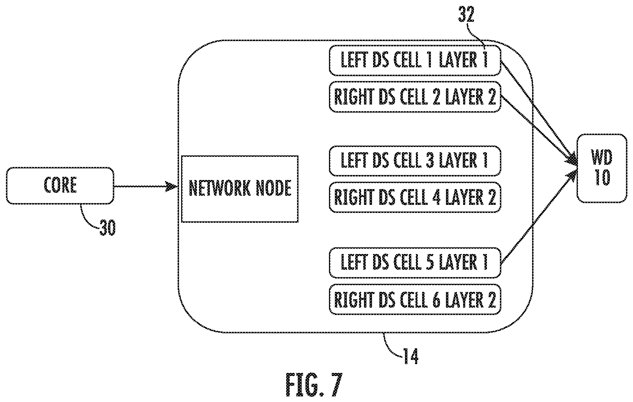

FIG. 7 illustrates logical connections between a network node 14 and a WD 10. A core node 30 may link the network node 14 to the public switched telephone network (PSTN) and/or the Internet and/or other networks. The logical connections 32 in the network node 14 enable the wireless device 10 to communicate simultaneously or in the alternative on, for example, a left digital sector of cell 1 on layer 1 (frequency 1) and on a right digital sector of cell 2 on layer 2. In anticipation of an intercell handoff to cell 5, communication between the network node 14 and the WD 10 may be established on a left digital sector of cell 5 on layer 1.

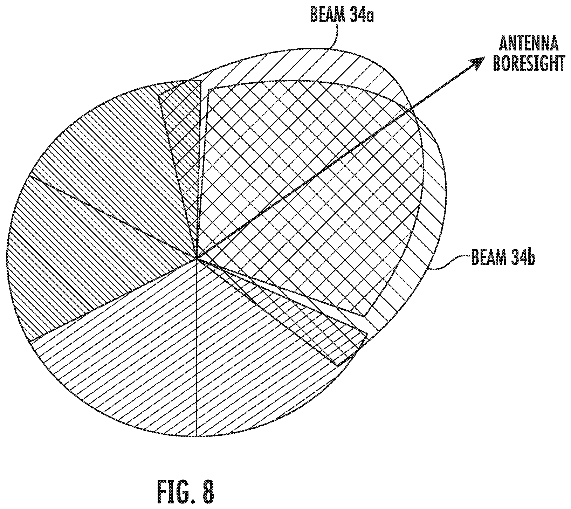

FIG. 8 illustrates one embodiment of beam shifting by the network node 14. As shown in FIG. 8, one sector covered by one antenna or antenna array can produce two beams, Beam 34a and Beam 34b, each slightly shifted to opposite sides of the antenna boresight. This results in maximum gain being to either side of the antenna boresight. A WD 10 may seek the highest reference signal received power (RSRP) to connect to a first carrier frequency, which is defined by the beam shape of CRS-0. In effect, a sum cell throughput can be increased by providing more gain to more WDs 10. In one scenario, dual band antenna beams for each digital sector on each layer can have different boresights. The shifting can be done by the network node 14 by digitally steering the beams using processing circuitry 28.

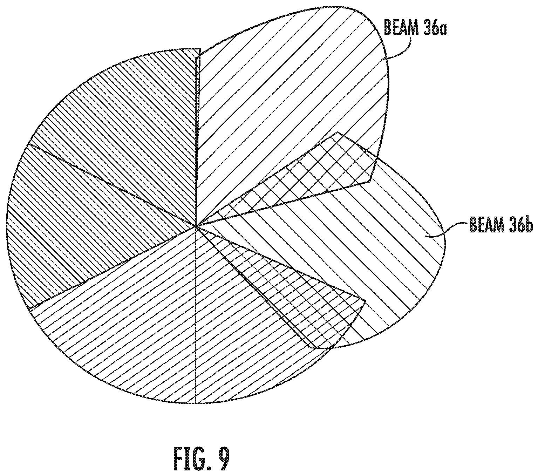

FIG. 9 illustrates one embodiment of shifting narrow Beams 36a and 36b. Thus, in some embodiments, the shape of each DS can be made narrower so that the gain in the main lobe of coverage is increased. Narrowing a beam increases the power radiated in the coverage area as opposed to generating interference outside the coverage area. In some embodiments, a width of each DS can be configured by an operator in the form of a half power bandwidth definition or cutoff attenuation at a given width from boresight.

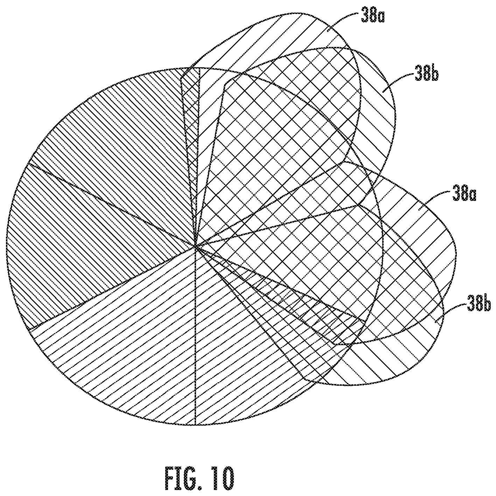

FIG. 10 illustrates splicing a cell into two or more sectors where a pair of beams on one layer (Beams 38a) are shifted from a pair of beams on another layer (Beams 38b). The shifting can be done by the network node 14 by digitally steering the beams using processing circuitry 28.

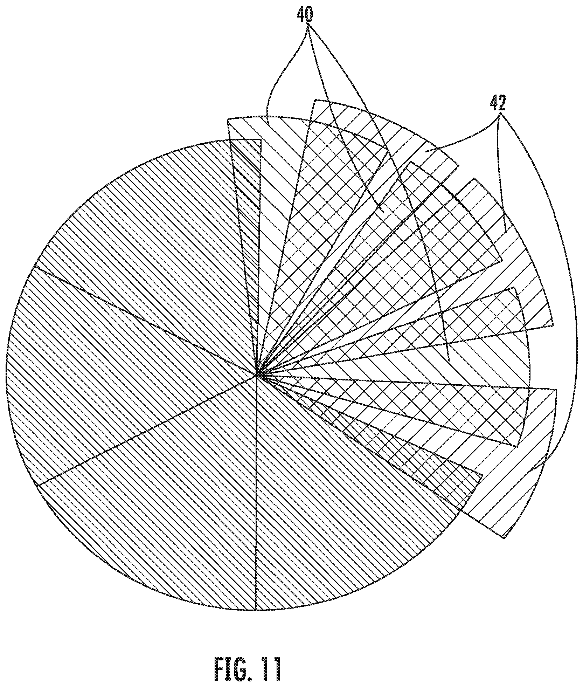

FIG. 11 illustrates a first set of non-overlapping digital sectors 40 on one layer and a second set of non-overlapping digital sectors 42 on another layer. The digital sectors 40 are shifted with respect to the digital sectors 42. Digital sectors of the first set overlap digital sectors of the second set but there is no interference between the two sets because they are on different layers.

Overlap may be defined in several ways. For example, two beams may be said to not overlap if their peaks are separated by an angular range, or if the portion of the main lobes above their HPBWs do not overlap. In some embodiments, two beams on the same layer are deemed to not overlap if only their sidelobes overlap.

### Mobility

As noted above, when a WD 10 enters a gap between two same-frequency beams, the WD 10 may be instructed to change its frequency to a frequency of the interstitial beam pointing in a direction between the two same-frequency beams. This may make this inter-frequency handover more demanding than handing over the WD 10 from one cell to another on the same carrier. Inter-frequency handover may require the WD 10 to remain attached to the current cell and listen to the other frequency before handover.

Effectively, the WD 10 traversing the cell in azimuth would alternate between:

| | |
|---|---|
| C1. | Swapping between PCell and SCell at the demand of the network node; |
| C2. | Releasing an SCell; and |
| C3. | Adding a new SCell. |

In a small cell (which may be interference limited), or when the WDs are close to the antenna array, the WD would be able to receive acceptable signal quality despite a very low reference signal received power (RSRP) due to the removal of interference. This facilitates releasing or adding a new SCell.

In a large cell scenario and where the WD 10 is far from the antenna, and is therefore power limited, the WD 10 handover can be handled as a traditional handover without carrier aggregation (CA) as it will always perceive another cell on the same carrier due to staging of the coverage.

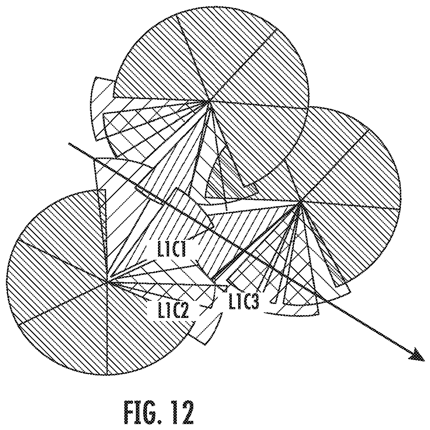

The WD 10 crossing at a cell edge need not swap between PCell and SCell, but rather, may be handed over to another frequency/layer. However, the WD 10 can stay on the same frequency/layer. An example of this is shown in FIG. 12, where a WD 10 may traverse from cell C1 on L1 to cell C2 on L1 to cell C3 on L1. This is possible because, for example, the coverage at cell edge is provided by multiple cells with optimum gain in a boresight direction. Being able to traverse cells while remaining on the same layer is useful where hopping across frequency is more costly than remaining on the same frequency at time of handoff. Therefore, the network node 14 may be configured with a list of neighboring cells of neighboring sites on the same frequency onto which it may handover the WD 10, before attempting inter-frequency handovers

For large cells, when the WD 10 crosses the cell center, the handover may not be necessary either because the WD 10 finds itself in the same situation as if it was in a small cell, with good pathloss and little interference.

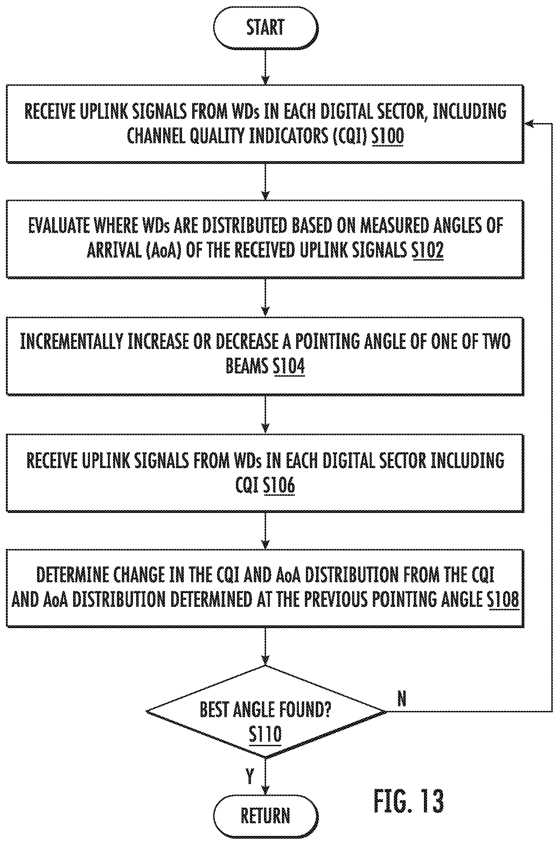

Thus, in some embodiments, an operator or infrastructure owner may configure specific beam boresights for each sector, with beams of adjacent sectors served by the base station being on different frequencies (layers). In some embodiments, the boresight of each digitally sectorized beam is adjusted based on measurements by the network node. Determining such adjustments may be performed at baseband by a processor of the network node. An example process for performing such measurement-based adjustments may be summarized as shown in the flowchart of FIG. 13 as follows:

| | |
|---|---|
| A1. | Receive uplink signals from WDs in each digital sector, including channel quality indicators (CQI) (Block S100); |
| A2. | Evaluate where WDs are distributed based on measured angles of arrival (AoA) of the received uplink signals (Block S102); |
| A3. | Incrementally increase or decrease a pointing angle of one of two beams (Block S104). Whether and by how much to increment can be based on observations of clusters of WDs 10 as seen from a distribution of AoAs; |
| A4. | Receive uplink signals from WDs in each digital sector including CQI (Block S106); |
| A5. | Determine change in the CQI and AoA distribution from the CQI and AoA distribution determined at the previous pointing angle (Block S108); and |
| A6. | Repeat steps A1-A5 until the best pointing angle for the one of the two beams is found (Block S110), where what is "best" may be the pointing angle that results in the most densely concentrated distribution of WDs covered by a beam (as determined by measured AoAs) and/or results in the highest average CQI, and/or results in the optimization of some other measure or key performance indicator (KPI). |

The incremental changes in pointing angle may be in increments of fractions of a degree on a scale of fractions of a second. The gathering of the data of steps A1-6 (Blocks S100-110) may be rapid enough to gather enough WD data to accurately determine the best pointing angle but slow enough to not shift the beam faster than the beam would be shifted by slow fading.

Thus, an optimal pointing angle may be determined. Once this is done, the digitally sectorized beam may be steered to the optimal pointing angle. Then, a beam on a second frequency can be steered between two digitally sectorized beams on the first frequency, so that adjacent beams are on different frequencies Then, if a WD 10 leaves beam coverage in a first sector to beam coverage in a second sector, the WD 10 can change frequency from the first frequency to the second frequency to receive a strong signal in the second sector that is not interfered with by the strong signal in the first sector. By placing adjacent digitally sectorized beams of a cell on different layers (frequencies), seamless coverage from sector to sector is provided.

The shapes of the beams can be made narrower when spatially and frequency interleaved as just described. Consequently, the boresight gain of each beam can be increased, with less energy of a beam radiating into nearby sectors.

In some cases, the network operator may specify a half power beam width or other beam width measure such as cutoff attenuation at a given width from boresight. In some cases, the process described above in steps A1-A6 (Blocks S100-S110) may be performed periodically or occasionally.

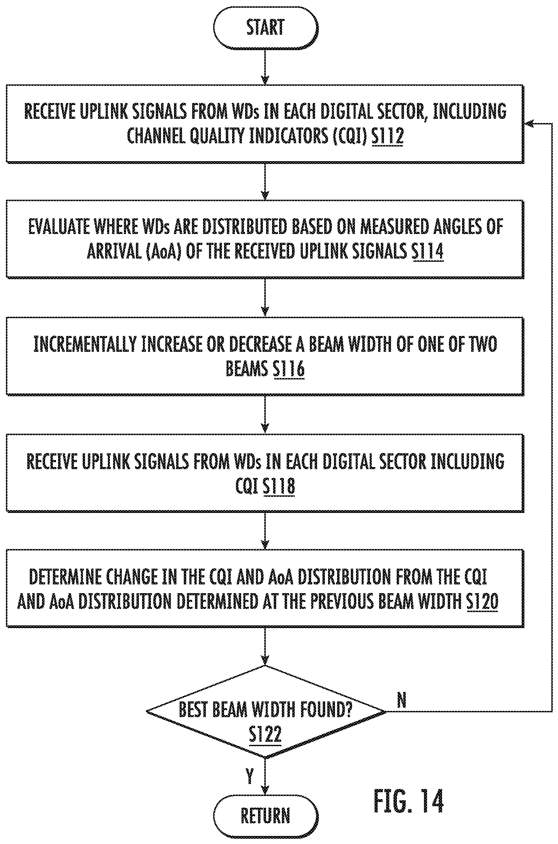

In some embodiments, a slightly different process than that described above can be implemented to optimize a beam width of a digitally sectorized beam. An example process of this is shown in FIG. 14, and described as follows:

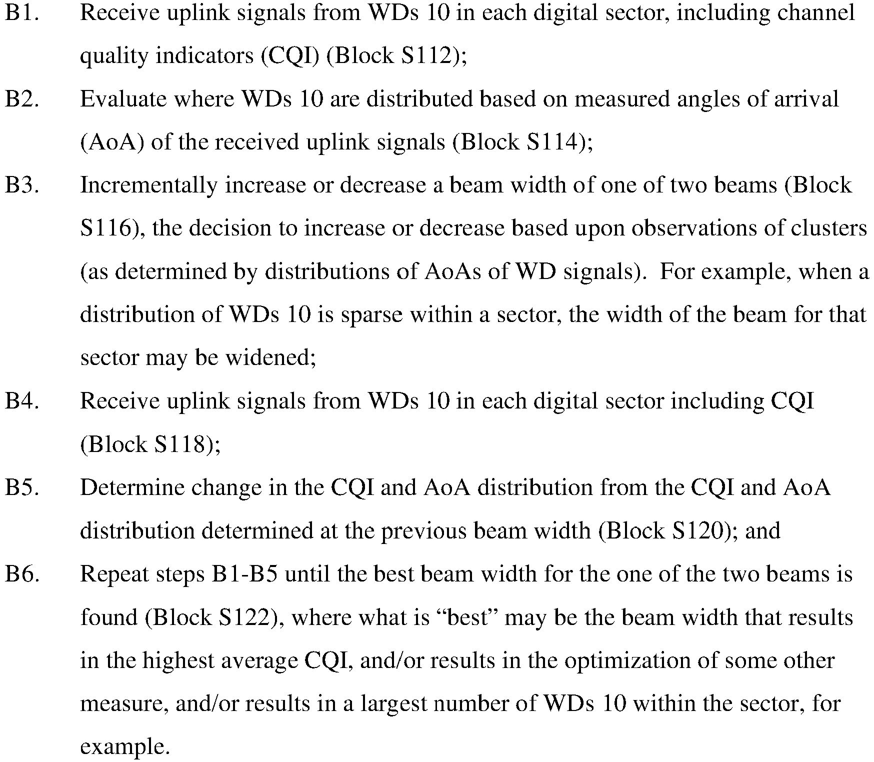

Thus, some embodiments involve shaping and pointing digitally sectorized beams according to criteria, so that there is no or very low interference between beams of a same frequency. That is because only low sidelobes of two beams of a same frequency overlap. The beam that is steered to a pointing angle between these two beams has large spatial overlap with the two beams. However, since the overlap is of beams of different frequencies, the overlap does not result in interference between the overlapping beams.

A balance may be sought between increasing a number of WDs 10 covered by a beam, which may include increasing beam width, and avoiding interference between beams, which may include decreasing beam width. When only a few WDs 10 are within coverage of a beam, the width can be increased to cover more WDs 10 and to enable greater carrier aggregation to further improve throughput. In contrast, when WDs 10 within coverage of a beam are more numerous, a beam might be narrowed and more beams may be introduced to segregate the WDs 10 into smaller sectors to improve the signal to interference plus noise ratio (SINR) and throughput.

The adjustments to beam width and pointing direction may be made incrementally over many transmission time intervals (TTI). Also, it is contemplated that different strategies for beam forming may be used at the same time for different beams or sectors. For example, one or more beams can be optimized to point at one or more clusters of WDs, while one or more other beams may be optimized to provide broad coverage over a sector or subsector. Different optimization criteria may be applied to different layers and/or different groups of beams.

Gaps between beams of the same frequency and digital sector directions and width can be configured and scaled according to a distribution of WDs 10. The WD 10 distribution can, for example, be determined based on:
- AoA measurements on uplink signals;
- precoder matrix indicator (PMI) selections by the WD;
- a count of radio resource control (RRC)-connected WDs 10 per digital sector, and/or
- a count of active WDs 10 (that is, WDs 10 with packets in their buffers) that are in the scheduler; and/or
- Global Positioning System (GPS) reports or other position reports from the WDs 10 or other positioning information sources.

For example, suppose the antenna array senses angles of arrival (AoA) mostly coming from two directions. The AAS may then generate two beams that are broad enough to cover WDs 10 in these directions, but narrow enough to avoid overlap between the two beams. In the gap between these two beams, a third beam may be steered that is on a different frequency than the first two beams. In some cases, the two groups of WDs 10 in the two directions may be so close that adequate beam separation between the two beams cannot be achieved. In such cases, the two beams may be assigned different frequencies.

Further, remote electrical tilt (RET) or digital tilt can be performed in time according to desired changes in the shape of a digitally sectorized beam. Narrow beam shapes tend to have higher peak equivalent isotropic radiated power (EIRP), which may require tilt in elevation to keep a same effective footprint as would be achieved by a broader beam.

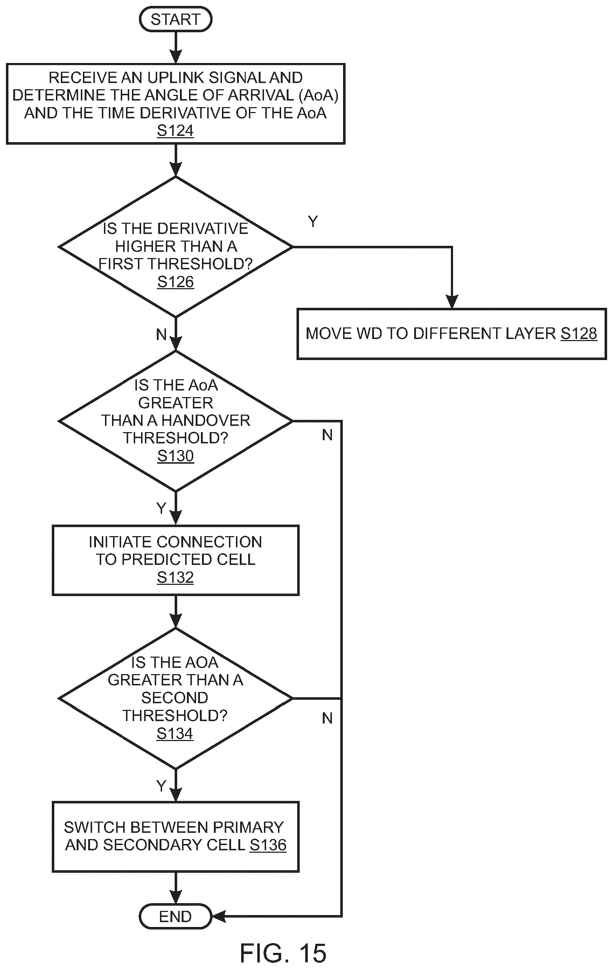

FIG. 15 is a flowchart of an example process for handover of a WD 10 from one sector to another. In the flowchart of FIG. 15, the network node 14 determines an AoA of a signal from a WD 10 to be handed over and determines change (derivative) of AoA with respect to time (Block S 124). When the angle of arrival of signals from the WD 10 is changing rapidly, in other words, when the derivative is the higher than a first threshold (Block S 126), the WD 10 is handed over to the interstitial beam at a different frequency than the beam from which the WD 10 moves (Block S128). However, if the AoA is not changing that rapidly (as compared to the first threshold, for example), the AoA is compared to a handover threshold (Block S 130). If the AoA is greater than the handover threshold, then a connection to another cell is initiated (Block S132). If the AoA is greater than a second threshold (Block S134), then the WD 10 is switched between a primary cell PCell and a secondary cell SCell (Block S136).

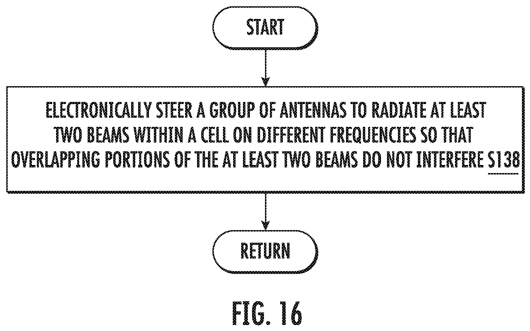

FIG. 16 is a flowchart of an example process for electronically steering beams on different layers. The process includes electronically steering a group of antennas 20 to radiate at least two beams within a cell on different frequencies so that overlapping portions of the at least two beams do not interfere (Block S138).

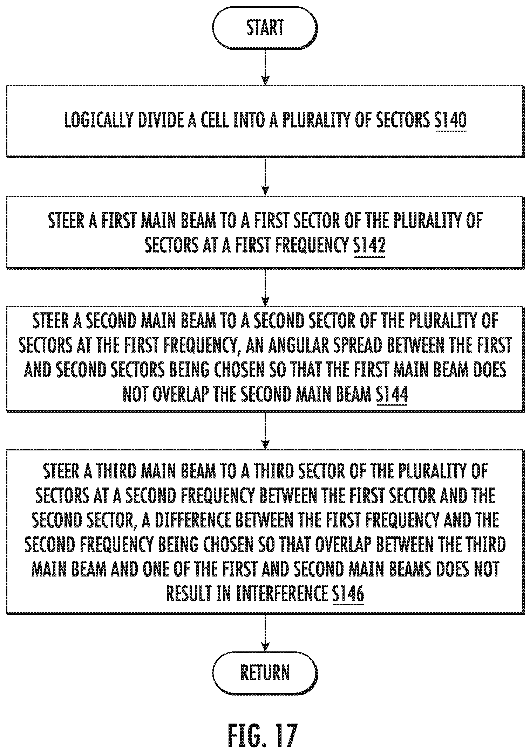

FIG. 17 is a flowchart of an example process for electronically steering beams on different layers. The process includes: logically dividing, via the sectorization unit 26, a cell into a plurality of sectors (Block S 140); steering, via the beamformer 18, a first main beam to a first sector of the plurality of sectors at a first frequency (Block S 142); steering, via the beamformer 18, a second main beam to a second sector of the plurality of sectors at the first frequency, an angular spread between the first and second sectors being chosen so that the first main beam does not overlap the second main beam (Block S144); and steering, via the beamformer 18, a third main beam to a third sector of the plurality of sectors at a second frequency between the first sector and the second sector, a difference between the first frequency and the second frequency being chosen so that overlap between the third main beam and one of the first and second main beams does not result in interference (Block S146).

As another mobility feature, in the case of non-overlapping digital sectors, Doppler measurements may be made and used to decide when to push WDs 10 having high Doppler onto a layer that is not digitally sectorized.

According to one aspect, a network node 14 is configured for multilayer, spatially diverse communications. The network node 14 includes a group of antennas 20 configured to radiate at least two beams within a cell on different frequencies so that overlapping portions of the at least two beams do not interfere.

According to this aspect, in some embodiments, the network node 14 further includes a beamformer 18 configured to incrementally vary a beam width of at least one of the at least two beams based at least in part on a density of wireless devices 10 (WDs) within a region of coverage of at least one of the at least two beams. In some embodiments, a beam width is selected, via the sectorization unit 26, that results in a narrowest beam width for which communication can be sustained with a given set of WDs 10. In some embodiments, the network node 14 further includes a beamformer 18 configured to incrementally vary a pointing angle of at least one of the at least two beams based at least in part on a density of wireless devices 10 within a region of coverage of at least one of the at least two beams. In some embodiments, a pointing angle is selected, via the sectorization unit 26, that results in a highest concentration of WDs 10 supported by one of the at least two beams. In some embodiments, a distribution of wireless devices 10 supported by one of the at least two beams is determined, via the distribution unit 27, based at least in part on angles of arrivals of uplink signals from the WDs 10. In some embodiments, a distribution of wireless devices 10 supported by one of the at least two beams is determined, via the distribution unit 27, based at least in part on precoder matrix indicator (PMI) feedback of the WDs 10. In some embodiments, a distribution of wireless devices 10 supported by one of the at least two beams is determined, via the distribution unit 27, based at least in part on a number of radio resource control (RRC)-connected WDs 10. In some embodiments, at least one of a beam width and a pointing angle is based at least on channel quality indicators (CQI) received from a plurality of wireless devices (WDs). In some embodiments, the network node 14 is further configured to add beams, each added beam having a beam width that is narrower than a current beam width when a number of wireless devices 10 within coverage of one of the at least two beams exceeds a threshold. In some embodiments, the network node 14 is further configured to remove beams and adjust a width of at least one of remaining beams. In some embodiments, the group of antennas 20 is configured to be excited to radiate a third beam within the cell on a first frequency of the frequencies of the at least two beams, the third beam being positioned such that only sidelobes of the third beam overlap a main beam of the at least two beam that is on the first frequency.

According to another aspect, a method in a network node 14 configured for multilayer, spatially diverse communications is provided. The method includes electronically steering a group of antennas 20 to radiate at least two beams within a cell on different frequencies so that overlapping portions of the at least two beams do not interfere.

According to this aspect, in some embodiments the method further includes varying, via the beamformer 18 receiving input from the sectorization unit 26, a beam width of at least one of the at least two beams based at least in part on a density of wireless devices 10 within a region of coverage of at least one of the at least two beams. In some embodiments, a beam width is selected by the sectorization unit 26, that results in a highest concentration of WDs 10 supported by one of the at least two beams. In some embodiments, the method further includes incrementally varying, via the sectorization unit 26, a pointing angle of at least one of the at least two beams based at least in part on a density of wireless devices 10 within a region of coverage of at least one of the at least two beams. In some embodiments, a pointing angle is selected, via the sectorization unit 26, that results in a highest concentration of WDs 10 supported by one of the first, second and third beams. In some embodiments, a distribution of wireless devices 10 supported by one of the at least two beams is determined, via the distribution unit 27, based at least in part on angles of arrivals of uplink signals from the WDs. In some embodiments, a distribution of wireless devices 10 supported by one of the at least two beams is determined, via the distribution unit 27, based at least in part on precoder matrix indicator (PMI) selections of the WDs 10. In some embodiments, a distribution of wireless devices 10 supported by one of the at least two beams is determined based at least in part on a number of radio resource control (RRC)-connected WDs 10. In some embodiments, at least one of a beam width and a pointing angle is based at least on channel quality indicators (CQI) received from a plurality of wireless devices 10. In some embodiments, the method further includes adding beams via the sectorization unit 26, each added beam having a beam width that is narrower than a current beam width when a number of wireless devices 10 within coverage of one of the at least two beams exceeds a threshold. In some embodiments, the method further includes removing beams via the sectorization unit 26 and adjusting a width of at least one of remaining beams. In some embodiments, a third beam is radiated within the cell on a first frequency of the frequencies of the at least two beams, the third beam being positioned such that only sidelobes of the third beam overlap a main beam of the at least two beam that is on the first frequency.

According to yet another aspect, an advanced antenna system (AAS) includes a plurality of antennas 20 and processing circuitry 28 in communication with the plurality of antennas 20. The processing circuitry 28 is configured to: logically divide a coverage area into a plurality of sectors; steer a first main beam to a first sector of the plurality of sectors at a first frequency; steer a second main beam to a second sector of the plurality of sectors at the first frequency, an angular spread between the first and second sectors being chosen so that the first main beam does not overlap the second main beam; and steer a third main beam to a third sector of the plurality of sectors at a second frequency between the first sector and the second sector, a difference between the first frequency and the second frequency being chosen so that overlap between the third main beam and one of the first and second main beams does not result in interference.

According to another aspect, a method in an advanced antenna system (AAS) 22 includes logically dividing a coverage area into a plurality of sectors via the sectorization unit 26; steering a first main beam, via the beamformer 18, to a first sector of the plurality of sectors at a first frequency; steering a second main beam, via the beamformer 18, to a second sector of the plurality of sectors at the first frequency, an angular spread between the first and second sectors being chosen by the sectorization unit 26 so that the first main beam does not overlap the second main beam; and steering a third main beam, via the beamformer 18, to a third sector of the plurality of sectors at a second frequency between the first sector and the second sector, a difference between the first frequency and the second frequency being chosen so that overlap between the third main beam and one of the first and second main beams does not result in interference.

As will be appreciated by one of skill in the art, the concepts described herein may be embodied as a method, data processing system, and/or computer program product. Accordingly, the concepts described herein may take the form of an entirely hardware embodiment, an entirely software embodiment or an embodiment combining software and hardware aspects all generally referred to herein as a "circuit" or "module." Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks. It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments.

Some abbreviations used herein are explained as follows:

| Abbreviation | Explanation |
|---|---|
| AAS | Advanced antenna systems (massive MIMO) |
| BLER | block error rate |
| DS | Digital Sector (may be referred as Virtual sector) |
| MIMO | multiple input multiple output |
| MCS | Modulation and coding scheme |
| LA | link adaptation |
| OLA | outerloop link-adaptation |
| MU-MIMO | multi user mimo |
| RET | analogue electrical tilt provided by antenna |

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A network node (14) configured for multilayer, spatially diverse communications, the network node (14) comprising:
a group of antennas (20) configured to radiate at least two beams within a cell on different frequencies so that overlapping portions of the at least two beams do not interfere, the network node being **characterized in that**
the group of antennas (20) is configured to be excited to radiate a third beam within the cell on a first frequency of the frequencies of the at least two beams, the third beam being positioned such that only sidelobes of the third beam overlap a main beam of the at least two beams that is on the first frequency.

2. The network node (14) of Claim 1, further comprising a beamformer (18), the beamformer (18) being configured to incrementally vary a beam width of at least one of the at least two beams based at least in part on a density of wireless devices, WDs, (10) within a region of coverage of at least one of the at least two beams.

3. The network node (14) of Claim 2, wherein a beam width is selected that results in a narrowest beam width for which communication can be sustained with a given set of WDs (10).

4. The network node (14) of any of Claims 1 and 3, further comprising a beamformer (18) , the beamformer (18) being configured to incrementally vary a pointing angle of at least one of the at least two beams based at least in part on a density of wireless devices ,WDs, (10) within a region of coverage of at least one of the at least two beams.

5. The network node (14) of Claim 4, wherein a pointing angle is selected that results in a highest concentration of WDs (10) supported by one of the at least two beams.

6. The network node (14) of any of Claims 1-5, wherein a distribution of wireless devices ,WDs, (10) supported by one of the at least two beams is determined based at least in part on angles of arrivals of uplink signals from the WDs (10).

7. The network node (14) of any of Claims 1-6, wherein a distribution of wireless devices ,WDs, (10) supported by one of the at least two beams is determined based at least in part on precoder matrix indicator ,PMI, feedback of the WDs (10).

8. The network node (14) of any of Claims 1-7, wherein a distribution of wireless devices ,WDs, (10) supported by one of the at least two beams is determined based at least in part on a number of radio resource control ,RRC, connected WDs (10).

9. The network node (14) of any of Claims 1-8, wherein at least one of a beam width and a pointing angle is based at least in part on channel quality indicators ,CQI, received from a plurality of wireless devices ,WDs, (10).

10. The network node (14) of any of Claims 1-9, wherein the network node (14) is further configured to add beams, each added beam having a beam width that is narrower than a current beam width when a number of wireless devices ,WDs, (10) within coverage of one of the at least two beams exceeds a threshold.

11. The network node (14) of any of Claims 1-10, wherein the network node (14) is further configured to remove beams and adjust a width of at least one of remaining beams.

12. A method in a network node (14) configured for multilayer, spatially diverse communications, the method comprising:
electronically steering (S138) a group of antennas (20) to radiate at least two beams within a cell on different frequencies so that overlapping portions of the at least two beams do not interfere, the method being **characterized in that**
the group of antennas (20) is configured to be excited to radiate a third beam within the cell on a first frequency of the frequencies of the at least two beams, the third beam being positioned such that only sidelobes of the third beam overlap a main beam of the at least two beams that is on the first frequency.

## Patentansprüche

1. Netzwerkknoten (14), der für mehrschichtige, räumlich vielfältige Kommunikation konfiguriert ist, wobei der Netzwerkknoten (14) Folgendes umfasst:
eine Gruppe von Antennen (20), die dazu konfiguriert sind, innerhalb einer Zelle mindestens zwei Strahlen auf unterschiedlichen Frequenzen derart auszusenden, dass sich überlappende Abschnitte der mindestens zwei Strahlen nicht stören, wobei der Netzwerkknoten **dadurch gekennzeichnet ist,**
**dass** die Gruppe von Antennen (20) dazu konfiguriert ist, angeregt zu werden, um innerhalb der Zelle einen dritten Strahl auf einer ersten Frequenz der Frequenzen der mindestens zwei Strahlen auszusenden, wobei der dritte Strahl so positioniert ist, dass sich nur Nebenkeulen des dritten Strahls mit einem Hauptstrahl der mindestens zwei Strahlen überlappen, der auf der ersten Frequenz liegt.

2. Netzwerkknoten (14) nach Anspruch 1, ferner umfassend einen Strahlformer (18), wobei der Strahlformer (18) dazu konfiguriert ist, eine Strahlbreite von mindestens einem der mindestens zwei Strahlen schrittweise zu variieren, basierend mindestens teilweise auf einer Dichte von drahtlosen Vorrichtungen, WDs, (10) innerhalb eines Abdeckungsbereichs von mindestens einem der mindestens zwei Strahlen.

3. Netzwerkknoten (14) nach Anspruch 2, wobei eine Strahlbreite ausgewählt ist, die zu einer engsten Strahlbreite führt, bei der eine Kommunikation mit einer gegebenen Reihe von WDs (10) aufrechterhalten werden kann.

4. Netzwerkknoten (14) nach einem der Ansprüche 1 und 3, ferner umfassend einen Strahlformer (18), wobei der Strahlformer (18) dazu konfiguriert ist, einen Ausrichtungswinkel von mindestens einem der mindestens zwei Strahlen schrittweise zu variieren, basierend mindestens teilweise auf einer Dichte von drahtlosen Vorrichtungen ,WDs, (10) innerhalb eines Abdeckungsbereichs von mindestens einem der mindestens zwei Strahlen.

5. Netzwerkknoten (14) nach Anspruch 4, wobei ein Ausrichtungswinkel ausgewählt ist, der zu einer höchsten Konzentration von WDs (10) führt, die von einem der mindestens zwei Strahlen unterstützt werden.

6. Netzwerkknoten (14) nach einem der Ansprüche 1-5, wobei eine Verteilung von drahtlosen Vorrichtungen ,WDs, (10), die von einem der mindestens zwei Strahlen unterstützt werden, basierend mindestens teilweise auf Ankunftswinkeln von Uplink-Signalen von den WDs (10) bestimmt wird.

7. Netzwerkknoten (14) nach einem der Ansprüche 1-6, wobei eine Verteilung von drahtlosen Vorrichtungen ,WDs, (10), die von einem der mindestens zwei Strahlen unterstützt werden, basierend mindestens teilweise auf einer Rückmeldung des Vorkodierer-Matrix-Indikators ,PMI, der WDs (10) bestimmt wird.

8. Netzwerkknoten (14) nach einem der Ansprüche 1-7, wobei eine Verteilung von drahtlosen Vorrichtungen ,WDs, (10), die von einem der mindestens zwei Strahlen unterstützt werden, basierend mindestens teilweise auf einer Anzahl von mit Funkressourcensteuerung ,RRC, verbundenen WDs (10) bestimmt wird.

9. Netzwerkknoten (14) nach einem der Ansprüche 1-8, wobei mindestens eines von einer Strahlbreite und einem Ausrichtungswinkel mindestens teilweise auf Kanalqualitätsindikatoren ,CQI, basiert, die von einer Vielzahl von drahtlosen Vorrichtungen ,WDs, (10) empfangen wurden.

10. Netzwerkknoten (14) nach einem der Ansprüche 1-9, wobei der Netzwerkknoten (14) ferner dazu konfiguriert ist, Strahlen hinzuzufügen, wobei jeder hinzugefügte Strahl eine Strahlbreite aufweist, die enger ist als eine aktuelle Strahlbreite, wenn eine Anzahl drahtloser Vorrichtungen ,WDs, (10) innerhalb einer Abdeckung durch einen der mindestens zwei Strahlen einen Schwellenwert überschreitet.

11. Netzwerkknoten (14) nach einem der Ansprüche 1-10, wobei der Netzwerkknoten (14) ferner dazu konfiguriert ist, Strahlen zu entfernen und eine Breite von mindestens einem der verbleibenden Strahlen anzupassen.

12. Verfahren in einem Netzwerkknoten (14), der für mehrschichtige, räumlich vielfältige Kommunikation konfiguriert ist, wobei das Verfahren Folgendes umfasst:
elektronisches Steuern (S138) einer Gruppe von Antennen (20) dazu, innerhalb einer Zelle mindestens zwei Strahlen auf unterschiedlichen Frequenzen derart auszusenden, dass sich überlappende Abschnitte der mindestens zwei Strahlen nicht stören, wobei das Verfahren **dadurch gekennzeichnet ist, dass** die Gruppe von Antennen (20) dazu konfiguriert ist, angeregt zu werden, um innerhalb der Zelle einen dritten Strahl auf einer ersten Frequenz der Frequenzen der mindestens zwei Strahlen auszusenden, wobei der dritte Strahl so positioniert ist, dass sich nur Nebenkeulen des dritten Strahls mit einem Hauptstrahl der mindestens zwei Strahlen überlappen, der auf der ersten Frequenz liegt.

## Revendications

1. Nœud de réseau (14) configuré pour des communications multicouches spatialement diverses, le nœud de réseau (14) comprenant :
un groupe d'antennes (20) configuré pour rayonner au moins deux faisceaux à l'intérieur d'une cellule sur des fréquences différentes de sorte que des parties se chevauchant des au moins deux faisceaux n'interfèrent pas, le nœud de réseau étant **caractérisé en ce que**
le groupe d'antennes (20) est configuré pour être excité pour rayonner un troisième faisceau à l'intérieur de la cellule sur une première fréquence des fréquences des au moins deux faisceaux, le troisième faisceau étant positionné de sorte que seuls des lobes secondaires du troisième faisceau chevauchent un faisceau principal des au moins deux faisceaux qui est sur la première fréquence.

2. Nœud de réseau (14) selon la revendication 1, comprenant en outre un formateur de faisceau (18), le formateur de faisceau (18) étant configuré pour faire varier de manière incrémentielle une largeur de faisceau d'au moins un des au moins deux faisceaux sur la base au moins en partie d'une densité de dispositifs sans fil, WD, (10) à l'intérieur d'une région de couverture d'au moins un des au moins deux faisceaux.

3. Nœud de réseau (14) selon la revendication 2, dans lequel une largeur de faisceau est sélectionnée qui résulte en une largeur de faisceau la plus étroite pour laquelle une communication peut être maintenue avec un ensemble donné de WD (10).

4. Nœud de réseau (14) selon la revendication 1 ou 3, comprenant en outre un formateur de faisceau (18), le formateur de faisceau (18) étant configuré pour faire varier de manière incrémentielle un angle de pointage d'au moins un des au moins deux faisceaux sur la base au moins en partie d'une densité de dispositifs sans fil , WD, (10) à l'intérieur d'une région de couverture d'au moins un des au moins deux faisceaux.

5. Nœud de réseau (14) selon la revendication 4, dans lequel un angle de pointage est sélectionné qui résulte en une concentration la plus élevée de WD (10) pris en charge par l'un des au moins deux faisceaux.

6. Nœud de réseau (14) selon l'une quelconque des revendications 1 à 5, dans lequel une distribution de dispositifs sans fil , WD, (10) pris en charge par l'un des au moins deux faisceaux est déterminée sur la base au moins en partie d'angles d'arrivée de signaux de liaison montante en provenance des WD (10).

7. Nœud de réseau (14) selon l'une quelconque des revendications 1 à 6, dans lequel une distribution de dispositifs sans fil , WD, (10) pris en charge par l'un des au moins deux faisceaux est déterminée sur la base au moins en partie d'un retour d'indicateur de matrice de précodage ,PMI, des WD (10).

8. Nœud de réseau (14) selon l'une quelconque des revendications 1 à 7, dans lequel une distribution de dispositifs sans fil , WD, (10) pris en charge par l'un des au moins deux faisceaux est déterminée sur la base au moins en partie d'un nombre de WD (10) connectés en commande de ressources radio ,RRC.

9. Nœud de réseau (14) selon l'une quelconque des revendications 1 à 8, dans lequel au moins un élément parmi une largeur de faisceau et un angle de pointage est basé au moins en partie sur des indicateurs de qualité de canal ,CQI, reçus en provenance d'une pluralité de dispositifs sans fil , WD, (10).

10. Nœud de réseau (14) selon l'une quelconque des revendications 1 à 9, dans lequel le nœud de réseau (14) est en outre configuré pour ajouter des faisceaux, chaque faisceau ajouté ayant une largeur de faisceau qui est plus étroite qu'une largeur de faisceau actuelle lorsqu'un nombre de dispositifs sans fil , WD, (10) à l'intérieur d'une couverture de l'un des au moins deux faisceaux dépasse un seuil.

11. Nœud de réseau (14) selon l'une quelconque des revendications 1 à 10, dans lequel le nœud de réseau (14) est en outre configuré pour retirer des faisceaux et ajuster une largeur d'au moins un des faisceaux restants.

12. Procédé dans un nœud de réseau (14) configuré pour des communications multicouches spatialement diverses, le procédé comprenant :
l'orientation électronique (S138) d'un groupe d'antennes (20) pour rayonner au moins deux faisceaux à l'intérieur d'une cellule sur des fréquences différentes de sorte que des parties se chevauchant des au moins deux faisceaux n'interfèrent pas, le procédé étant **caractérisé en ce que** le groupe d'antennes (20) est configuré pour être excité pour rayonner un troisième faisceau à l'intérieur de la cellule sur une première fréquence des fréquences des au moins deux faisceaux, le troisième faisceau étant positionné de sorte que seuls des lobes secondaires du troisième faisceau chevauchent un faisceau principal des au moins deux faisceaux qui est sur la première fréquence.
